# EUROPÄISCHE PATENTSCHRIFT

(11) **EP 1 744 637 B1**
(45) Veröffentlichungstag und Bekanntmachung des Hinweises auf die Patenterteilung: **13.02.2008**
(21) Anmeldenummer: 04822047.9
(22) Anmeldetag: 10.12.2004
(51) Int. Cl.: A22C 11/02

(54) **VORRICHTUNG ZUM AUTOMATISIERTEN ÜBERWACHEN VON VERPACKUNGSMASCHINEN FÜR DIE WURSTHERSTELLUNG**
DEVICE FOR THE AUTOMATED MONITORING OF PACKAGING MACHINES FOR THE PRODUCTION OF SAUSAGES
DISPOSITIF DE SURVEILLANCE AUTOMATISEE DE MACHINES D'EMBALLAGE POUR LA FABRICATION DE SAUCISSES

(30) Priorität: 12.05.2004 DE 202004007789 U
(43) Veröffentlichungstag der Anmeldung: 24.01.2007
(73) Patentinhaber: Tipper Tie technopack GmbH, 21509 Glinde (DE)
(72) Erfinder: PLEWA, Manfred, 27283 Verden (DE); JÄCKEL, Gunnar, 21271 Asendorf (DE)
(74) Vertreter: Glawe, Delfs, Moll
(86) Internationale Anmeldenummer: PCT/EP2004/014107
(87) Internationale Veröffentlichungsnummer: WO 2005/115154

(56) Entgegenhaltungen:
- WO-A-00/03603
- DE-A1- 3 608 983
- US-A- 4 980 949
- US-A- 4 984 073
- US-A- 5 743 792
- US-A1- 2004 028 777
- US-B1- 6 524 178

## Beschreibung

Die Erfindung betrifft eine Vorrichtung, wie beispielsweise aus DE-A-100 15 893 bekannt, zur Überwachung von automatisierten Verpackungsmaschinen für die Wurstherstellung. Diese Maschinen dienen dazu, Wurstbrät in einen Kunst- oder Naturdarm zu füllen und die jeweiligen Enden des Darms zu verschließen.

Verpackungsmaschinen für die Wurstherstellung im Sinne der Erfindung bestehen aus folgenden Komponenten:
- einer Füllmaschine, die das Wurstbrät in das Eintrittsende eines Füllrohrs drückt,
- einer Darmbremse, die am Austrittsende des Füllrohrs angeordnet ist und
- einer Verschlussmaschine zum Verschließen des Darms.

Das Verpacken mit Hilfe solcher Maschinen geschieht üblicherweise wie folgt:
- Zunächst wird ein leerer, einseitig verschlossener Darm großer Länge vom Austrittsende des Füllrohrs her auf dieses auf gezogen. Er ist dann meist zu einer Raupe gerafft.
- Dann wird die Darmbremse in ihre Arbeitsstellung gebracht. Die Darmbremse ist eine Vorrichtung, die dem Abziehen des Darms vom Füllrohr eine Reibkraft entgegensetzt. Ohne eine solche Reibkraft würde der Darm nur ungleichmäßig vom Füllrohr abgezogen werden, womit eine gleichmäßige Verpackung kaum möglich wäre. Zumeist besteht die Darmbremse aus einem oder mehreren Ringen aus elastischem Material, die das Füllrohr umschließen. Befindet sich ein Darm auf dem Füllrohr, wird dieser durch das elastische Material auf die Oberfläche des Füllrohrs gedrückt, wodurch die gewünschte Reibkraft beim Abziehen entsteht. Die Arbeitsstellung der Darmbremse ist eine Stelle am Austrittsende des Füllrohrs (vgl. DE 199 53 695).
- Die Füllmaschine wird in Gang gesetzt. Das Brät gelangt durch das Füllrohr in den Darm. Da dieser am Austrittsende verschlossen ist, wird er nach und nach vom Füllrohr abgezogen. Die soben beschriebene Darmbremse sorgt dafür, dass dies gleichmäßig geschieht.
- Der so gefüllte Darm wird der Verschlussmaschine zugeführt, die ihn abschnittsweise verschließt. Dies kann beispielsweise dadurch geschehen, dass die Maschine den Darm mit Verdrängern einschnürt und dann Clipse auf den eingeschnürten Bereich setzt, die sich sich beim Andrücken auf eine Matrize verformen und dadurch einen Verschluss bilden.

Die Erfindung bezieht sich speziell auf automatisierte Verpackungsmaschinen für die Wurstherstellung. Diese arbeiten kontinuierlich, d.h. die Arbeitsgänge sind so aufeinander abgestimmt, dass fortlaufend einzelne Würste zu einer Wurstkette oder einzelnen, abgeteilten Würsten verpackt werden.

Bei solchen Maschinen besteht regelmäßig das Problem, das Erreichen des Darmendes abzupassen, damit die Füllmaschine rechtzeitig abgeschaltet werden kann. Ebenso muss die Füllmaschine bei sog. "Platzern" sofort abgeschaltet werden, d.h. bei einem unvorgesehenen Platzen des gefüllten und vom Füllrohr abgezogenen Darms. Eine Person ständig mit der Beaufsichtigung der Maschine zu betrauen, ist unwirtschaftlich.

Deshalb finden sich im Stand der Technik zahlreiche Vorschläge für eine automatisierte Überwachung des Verpackens. So ist beispielsweise vorgeschlagen worden, am Ende des Verpackungsschlauchs eine Krokodilklemme zu befestigen, die einen Schalter umlegt, wenn sich das Schlauchende in Bewegung gesetzt hat. Auch ist ein Schlepphebel erdacht worden, auf dem gerafften Darm aufliegt und mit dem metallischen Füllrohr in Kontakt kommt, sobald der Schlauch abgezogen ist. Durch die Herstellung des Kontakts wird ein elektrischer Schaltkreis geschlossen und ein entsprechendes Signal erzeugt. Mit diesen Neuerungen konnte aber nur das Erreichen des Schlauchendes erfasst werden, nicht hingegen Fehlfunktionen wie ein geplatzter Schlauch. Dies wird jedoch ermöglicht durch ein Laufrad im Endbereich des Füllrohrs, das auf dem Schlauchmaterial aufliegt und von diesem angetrieben wird, solange dieses ordnungsgemäß abgezogen wird; bei Stillstand des Rades, welcher von einem Sensor erfasst wird, liegt entweder ein Fehler vor, oder das Schlauchende ist erreicht (vgl. EP 0 755 188 B1).

Die vorbekannten Lösungen erfassen also entweder keine Fehlfunktion, oder sie machen von mechanischen und mechanischen Bauteilen Gebrauch, die einen erheblichen Wartungsaufwand mit sich bringen.

Die Erfindung stellt sich die Aufgabe, eine Überwachung sowohl von Fehlfunktionen als auch des Erreichens des Schlauchendes zu ermöglichen, die ohne mechanische Bauteile auskommt.

Die Erfindung löst diese Aufgabe durch die Merkmale des kennzeichnenden Teils des Schutzanspruchs 1.

Eine Kamera ist dabei ein beliebiges optisches Erfassungssystem für ein zweidimensionales Bild, das das System als ein elektrisches Bildsignal liefert. Der Begriff "elektrisch" erfasst dabei auch den Begriff "elektronisch".

Eine Auswerteeinheit ist eine Recheneinheit, die Bilder speichern und an ihnen Vergleichsoperationen durchführen kann.

Eine Abschalteinheit ist eine elektronische Einheit, die auf ein Signal der Auswerteeinheit hin die Füllmaschine abschaltet.

Die Auswerte- und/oder die Abschalteinheit können sowohl gein die Kamera, Füllmaschine o.ä. integriert als auch als eine bzw. zwei getrennte Komponenten ausgeführt sein.

Die Vorrichtung funktioniert beispielsweise mit folgendem Verfahren, das von der Auswerteeinheit durchzuführen ist:
Verfahren zum automatisierten Überwachen von Verpackungsmaschinen für die Wurstherstellung, die
   - eine Füllmaschine,
   - ein Füllrohr,
   - eine Darmbremse und
   - eine Verschlussmaschine
   aufweisen, gekennzeichnet durch folgende Schritte:
   a) Ein Initialisierungswert wird in einen Initialisierungsspeicher geschrieben.
   b) Mit einer Kamera wird ein Bereich der Verpackungsmaschine aufgenommen.
   c) Das von der Kamera erfasste Bild wird digitalisiert.
   d) Das digitalisierte Bild wird in einen Bildspeicher abgelegt.
   e) Wenn der Initialisierungsspeicher den Initialisierungswert enthält, wird dieser mit einem anderen Wert überschrieben und ein neuer Durchlauf beginnend mit Schritt b) gestartet.
   e') Andernfalls wird das gemäß Schritt d) gespeicherte Bild mit einem im Durchlauf zuvor gemäß Schritt d) gespeicherten Bild verglichen.
   f) Wenn der Vergleich gemäß Schritt e') eine Abweichung zwischen den Bildern ergibt, so wird der im Durchlauf zuvor gemäß Schritt d) belegte Bildspeicher freigegeben und ein neuer Durchlauf beginnt bei Schritt b).
   f') Andernfalls wird die Abschalteinheit aktiviert, so dass die Füllmaschine abgeschaltet wird.

Zusätzlich oder anstelle der Abschaltung der Füllmaschine gemäß Schritt f') kann ein Warnsignal ausgegeben und/oder andere Funktionen, z.B. ein Abschalten der Verschlussmaschine, ausgelöst werden.

Der von der Kamera gemäß Schritt b) aufgenommene Bereich der Verpackungsmaschine kann verschieden gewählt werden.

Denkbar ist, einen Bereich der vom Darm gebildeten Raupe auf dem Füllrohr aufzunehmen ("Raupenbereich"). Der Bereich muss dann so gewählt werden, dass der Darm in ihm bei ordnungsgemäßer Funktion durch das Abziehen ständig in Bewegung ist. Bei einem Platzer übt das nachstoßende Brät jedoch keinen Druck mehr aus, der den Darm abziehen könnte. Der Darm bewegt sich also nicht mehr, so dass beim Vergleich gemäß Schritt e') keine Abweichung zwischen den Bildern festgestellt, nach Schritt f') verzweigt und infolgedessen die Füllmaschine abgeschaltet wird. Wird das Darmende erreicht, verschwindet der Darm aus dem bei dieser Einstellung gewählten Bildbereich. Die aufeinander folgenden Bilder gleichen sich, so dass wieder von e') nach f') verzweigt wird. Man kann auch im Rahmen der Initialisierung gesonderte Schritte zur Aufnahme des blanken Füllrohrs ohne Darm und Speicherung dieses Bildes als Leerbild vorsehen. Außerdem kann vor Aktivierung der Abschalteinheit gemäß Schritt f') ein Vergleich des Leerbildes mit dem zuletzt aufgenommenen durchgeführt werden. Liefert dieser Vergleich keine Abweichung, so liegt kein Platzer vor, sondern das Darmende ist erreicht. Auf diese Weise kann zwischen einem Platzer und dem Erreichen des Darmendes unterschieden werden, was bei der Auslösung der weiteren Funktionen berücksichtigt werden kann.

Denkbar ist auch, einen Bereich mit einem Abschnitt des Darms zwischen Füllrohr und Verschlussmaschine aufzunehmen ("Ballonbereich"). Arbeitet die Maschine ordnungsgemäß, so bläht sich der Darm in diesem Bereich in periodischen Abständen zu Ballons von gleichbleibender Größe auf. Sind zwei hintereinander aufgenommene Bilder gleich, liegt ein Fehler vor, so dass von e') nach f') verzweigt wird. Man kann aber auch das o.g. Verfahren in Schritt f) dahin gehend ändern, dass bei einer Abweichung nach Schritt f') verzweigt und bei gleichen aufeinander folgenden Bildern zurück nach b) gesprungen wird. Zusätzlich muss dann die Aufnahme in Schritt b) an den Takt der Maschine gekoppelt werden, d.h. die Aufnahme wird immer dann gemacht, wenn sich die Maschine in einer bestimmten Phase befindet, z.B. wenn der Ballon besonders aufgebläht ist. Auf diese Weise können auch Schwankungen in der Größe festgestellt werden. Solche Schwankungen sind oft ein Hinweis auf eine mangelnde Qualität der hergestellten Würste, z.B. weil das Brät nicht die richtige Temperatur hat o.ä. Bei diesem Verfahren müssen nicht unbedingt aufeinanderfolgende Bilder verglichen werden. Denkbar ist auch, dass das zuletzt aufgenommene Bild zusätzlich oder statt dessen jeweils mit einem Sollbild verglichen wird. Das Sollbild kann im Rahmen der Initialisierung aufgenommen oder anderweitig vorgegeben und jeweils gespeichert werden.

Denkbar ist schließlich auch, die Kamera auf den Auslassbereich der Verschlussmaschine zu richten, wo die fertig abgepackten Würste in periodischen Abständen herausfallen oder herausrollen ("Wurstbereich"). Kommt hier keine Wurst, liegt ein Fehler vor, oder das Darmende ist erreicht. Ebenso wie bei Aufnahmen im Ballonbereich ist auch hier denkbar, die Aufnahmen gemäß Schritt b) mit dem Maschinentakt zu synchronisieren, um auch die Qualität der Würste zu überwachen. Denn bei Qualitätsschwankungen ändern sich auch die Größe und/oder die Form der Würste. Denkbar ist, die von der Wurst im Bild eingenommene Fläche auszumessen. Das kann beispielsweise dadurch geschehen, dass die Aufnahme in Farbe erfolgt, in der Auswerteeinheit die Farbe des Darms gespeichert wird und diese Einheit dann die Zahl der Bildpunkte bestimmt, die diese Farbe haben und in einer Fläche zusammenhängen. Die Zahl der Bildpunkte ist dann ein Maß für die Fläche. Auf entsprechende Weise können die Länge (durch Bestimmung der längsten Geraden auf der Fläche) oder andere Formeigenschaften bestimmt und überwacht werden. Die Farbe des Darms kann entweder in einem Initialisierungsschritt oder aber laufend bestimmt werden, indem zusätzlich ein Bereich des Darms im Raupen- oder Ballonbereich aufgenommen wird. Bei diesen Verfahrensvarianten können Farbtoleranzen berücksichtigt und so ggf. Lichtschwankungen, die sich auf die Farbe der Bildpunkte aufwirken, bestimmt werden.

Statt nur einen der genannten Bereiche aufzunehmen, können auch Raupen-, Ballon- und Wurstbereich miteinander kombiniert aufgenommen werden. Dazu können mehrere Kameras eingesetzt werden. Denkbar ist auch, zwei oder mehr Bereiche mit einer Kamera aufzunehmen und die Auswerteeinheit nur die entsprechenden Bildausschnitte auswerten zu lassen. In diesem Fall ließen sich insbesondere auch die oben beschriebenen einfachen und die getakteten Verfahren miteinander kombinieren, so dass die Überwachung insgesamt zuverlässiger wird.

Die Auswertung muss nicht auf den Vergleich von Standbildern beschränkt sein. Es können auch Filme aufgenommen werden (Ist-Filme), die laufend mit einem repräsentativen Film verglichen werden, der entweder bei der Initialisierung oder an einem ordnungsgemäß ablaufenden Vorgang aufgenommen wurde (Soll-Film). Auch hier ist es denkbar, unter dem Raupen-, Ballon- und Wurstbereich sowohl ein, zwei als auch alle drei Bereiche in die Auswertung einzubeziehen und mit einer oder mehreren Kameras zu arbeiten. Ebenso ist es möglich, den Beginn einer Filmaufnahme mit dem Maschinentakt zu koppeln.

Schließlich ist es auch möglich, Film- und Standbild-Auswertung miteinander zu kombinieren. So ist es beispielsweise denkbar, zur Überwachung von Platzern und des Erreichens des Darmendes den Raupenbereich und für die Überwachung der Qualität einen oder beide der anderen Bereiche auszuwählen.

Vorteilhafterweise sind zusätzlich eine transportable Anzeigeeinheit zum Sichtbarmachen des mit der Kamera aufgenommenen Bildes mit einer Empfangseinheit und eine Sendeeinheit zum Senden des Bildsignals an die Empfangseinheit vorgesehen. Diese Einheiten können dazu dienen, der Bedienperson, die die Anzeigeeinheit mit der Empfangseinheit mit sich führt, bei Auslösung eines Signals das zuletzt aufgenommene Bild bzw. den zuletzt aufgenommenen Film anzuzeigen.

Nachfolgend werden zwei Ausführungsbeispiele der Erfindung anhand von Zeichnungen näher erläutert. Es zeigen:
- Fig. 1:: eine schematische Darstellung einer Verpackungsmaschine für die Wurstherstellung mit drei Kameras und jeweils getrennten Bildbereichen;
- Fig. 2:: dieselbe Darstellung mit nur einer Kamera mit einem umfassenden Bildbereich.

Eine Verpackungsmaschine umfasst eine Füllmaschine F, an der das eine Ende eines Füllrohrs 1 befestigt ist. Auf dem anderen Ende des Füllrohrs 1 sitzt eine Darmbremse 2. Auf dem Abschnitt des Füllrohrs 1 vor der Darmbremse befindet sich das Ende eines Wurstdarms, der hier schematisch als Raupe 3 dargestellt ist. Jenseits der Darmbremse 2 folgt auf das Füllrohr 1 eine Verschlussmaschine V. Deren Auslassbereich befindet sich auf ihrer gegenüber liegenden Seite, wo eine herausfallende Wurst 5 eingezeichnet ist. Zwischen dem Rohr 1 und der Verschlussmaschine V bildet der Darm einen Ballon 4 aus.

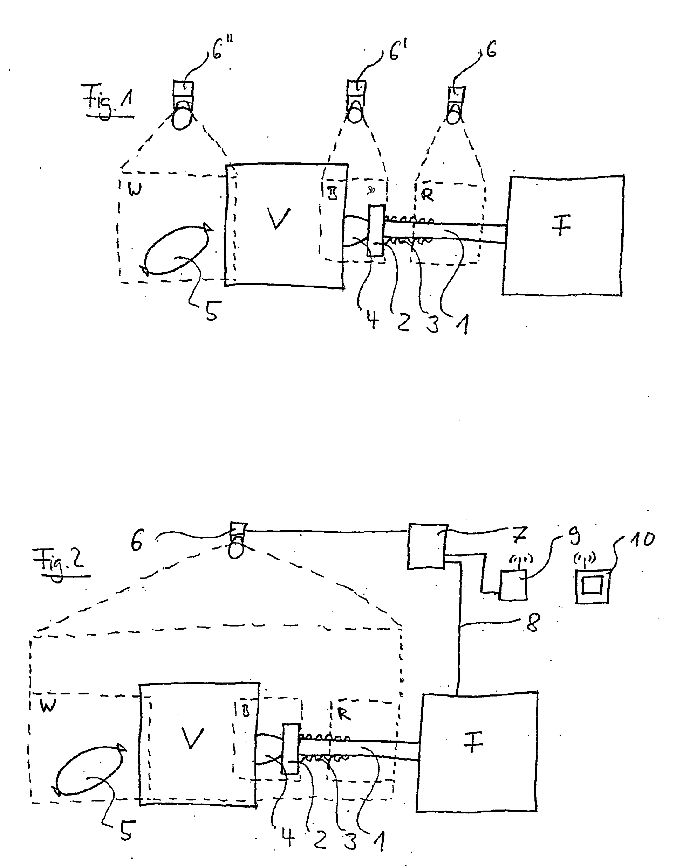

Gestrichelt sind jeweils ein Raupenbereich R, ein Ballonbereich B und ein Wurstbereich W eingezeichnet. Auf jeden der Bereiche ist eine Kamera 6, 6' bzw. 6" gerichtet. Wie in Fig. 2-zu erkennen; können die drei Kameras auch durch eine einzige Kamera 6 ersetzt werden, die einen größeren Bereich aufnimmt, der die Bereiche R, B und W umfasst.

Wie weiter in Fig. 2 dargestellt, ist an die Kamera 6 eine Auswerteeinheit 7 angeschlossen. Eine Abschalteinheit ist aus einem Kabel 8 und nicht dargestellten Schnittstellen in der Auswerteeinheit 7 und der Füllmaschine F ausgeführt. Überdies ist die Auswerteeinheit 7 über ein Kabel mit einer Sendeeinheit 9 verbunden, die per Funk das zuletzt auf genommene Bild bzw. die zuletzt aufgenommenen Bilder an die Empfangseinheit einer transportablen Anzeigeeinheit 10 senden kann.

## Patentansprüche

1. Vorrichtung zum automatisierten Überwachen von Verpackungsmaschinen für die Wurstherstellung, die eine Füllmaschine (F), ein Füllrohr (1), eine Darmbremse (2) und eine Verschlussmaschine (V) aufweisen, **gekennzeichnet durch** eine Kamera (6, 6', 6"), die ein elektrisches Bildsignal liefert, eine Auswerteeinheit (7) für das Bildsignal und eine von der Auswerteeinheit angesteuerte Abschalteinheit (8) für die Füllmaschine (F).

2. Vorrichtung nach Schutzanspruch 1, **dadurch gekennzeichnet, dass** zusätzlich eine transportable Anzeigeeinheit (10) zum Sichtbarmachen des mit der Kamera (6, 6', 6") aufgenommenen Bildes mit einer Empfangseinheit und eine Sendeeinheit(9)zum Senden des Bildsignals an die Empfangseinheit vorgesehen sind.

3. Verfahren zum automatisierten Überwachen von Verpackungsmaschinen für die Wurstherstellung, die
- eine Füllmaschine (F),
- ein Füllrohr (1),
- eine Darmbremse (2) und
- eine Verschlussmaschine (V)
aufweisen, **gekennzeichnet durch** folgende Schritte:
a) Ein Initialisierungswert wird in einen Initialisierungsspeicher geschrieben.
b) Mit einer Kamera (6, 6', 6") wird ein Bereich der Verpackungsmaschine aufgenommen.
c) Das von der Kamera (6, 6', 6") erfasste Bild wird digitalisiert.
d) Das digitalisierte Bild wird in einen Bildspeicher abgelegt.
e) Wenn der Initialisierungsspeicher den Initialisierungswert enthält, wird dieser mit einem anderen Wert überschrieben und ein neuer Durchlauf beginnend mit Schritt b) gestartet.
e') Andernfalls wird das gemäß Schritt d) gespeicherte Bild mit einem im Durchlauf zuvor gemäß Schritt d) gespeicherten Bild verglichen.
f) Wenn der Vergleich gemäß Schritt e') eine Abweichung zwischen den Bildern ergibt, so wird der im Durchlauf zuvor gemäß Schritt d) belegte Bildspeicher freigegeben und ein neuer Durchlauf beginnt bei Schritt b).
f') Andernfalls wird eine Abschalteinheit aktiviert, so dass die Füllmaschine (F) abgeschaltet wird.

4. Verfahren nach Anspruch 3, **dadurch gekennzeichnet, daß** zusätzlich oder anstelle der Abschaltung der Füllmaschine (F) gemäß Schritt f') ein Warnsignal ausgegeben und/oder andere Funktionen, z.B. ein Abschalten der Verschlussmaschine (V), ausgelöst wird.

## Claims

1. An apparatus for the automated monitoring of packaging machines for sausage production, which have a filling machine (F), a filling tube (1), a casing brake (2) and a sealing machine (V), **characterised by** a camera (6,6,6") which provides an electrical image signal, an evaluating unit (7) for the image signal and a switching-off unit (8) for the filling machine (F) activated by the evaluating unit.

2. An apparatus according to Claim 1, **characterised in that** additionally a portable display unit (10) is provided for displaying the image taken with the camera (6,6,6") with a receiving unit, and a transmitting unit (9) is provided for transmitting the image signal to the receiving unit.

3. A method for the automated monitoring of packaging machines for sausage production, which have
- a filling machine (F),
- a filling tube (1),
- a casing brake (2) and
- a sealing machine (V),
**characterised by** the following steps:
a) an initialising value is recorded in an initialising memory;
b) one zone of the packaging machine is photographed with a camera (6, 6, 6");
c) the image taken with the camera (6,6,6") is digitised;
d) the digitised image is filed in a video memory;
e) if the initialising memory contains the initialising value, it is overwritten with another value and a new pass is started, commencing with step b);
e') otherwise, the image stored according to step d) is compared with a image previously stored in the pass according to step d);
f) if the comparison according to step e') results in a deviation between the images, the video memory previously allocated in the pass according to step d) is cleared and a new pass commences with step b);
f') otherwise, the switching-off unit is activated so that the filling machine (F) is switched off.

4. A method according to Claim 3, **characterised in that**, in addition to or instead of the switching-off of the filling machine (F) according to step f'), an alarm signal is delivered and/or other functions, for example switching off of the sealing machine (V), are triggered.

## Revendications

1. Dispositif de surveillance automatisée de machines d'emballage pour la fabrication de saucisses, lesquelles comportent une machine de remplissage (F), un tube de remplissage (1), un frein de boyau (2) et une machine de fermeture (V), **caractérisé par** une caméra (6, 6', 6"), qui délivre un signal vidéo électrique, une unité d'analyse (7) pour le signal vidéo et une unité de déconnexion (8), commandée par l'unité d'analyse, pour la machine de remplissage (F).

2. Dispositif selon la revendication 1, **caractérisé en ce qu'**il est prévu en plus une unité d'affichage (10) portable pour visualiser l'image enregistrée avec la caméra (6, 6', 6"), comportant une unité de réception et une unité d'émission (9) destinée à envoyer le signal vidéo vers l'unité de réception.

3. Procédé de surveillance automatisée de machines d'emballage pour la fabrication de saucisses, lesquelles comportent :
- une machine de remplissage (F),
- un tube de remplissage (1),
- un frein de boyau (2), et
- une machine de fermeture (V),
**caractérisé par** les étapes suivantes :
a) une valeur d'initialisation est enregistrée dans une mémoire d'initialisation ;
b) une zone de la machine d'emballage est enregistrée au moyen d'une caméra (6, 6', 6") ;
c) l'image enregistrée au moyen de la caméra (6, 6', 6") est numérisée ;
d) l'image numérisée est stockée dans une mémoire d'images ;
e) si la mémoire d'initialisation contient la valeur d'initialisation, celle-ci est écrasée par une autre valeur et un nouveau processus recommence à partir de l'étape b) ;
e') dans le cas contraire, l'image stockée selon l'étape d) est comparée à une image mémorisée selon l'étape d) au cours du processus précédent ;
f) si la comparaison selon l'étape e') révèle une différence entre les images, la mémoire d'images, occupée selon l'étape d) au cours du processus précédent, est libérée et un nouveau processus commence à partir de l'étape b) ;
f') dans le cas contraire, une unité de déconnexion est activée, de telle sorte que la machine de remplissage (F) est débranchée.

4. Procédé selon la revendication 3, **caractérisé en ce que**, en plus ou en lieu et place de la déconnexion de la machine de remplissage (F) selon l'étape f'), un signal d'alarme est délivré et/ou d'autres fonctions, telles que le débranchement de la machine de fermeture (V), sont déclenchées.
